(19) Europäisches Patentamt
European Patent Office
Office européen des brevets

(11) **EP 2 248 338 B1**

(12) **FASCICULE DE BREVET EUROPEEN**

(45) Date de publication et mention
de la délivrance du brevet:
**17.02.2016 Bulletin 2016/07**

(21) Numéro de dépôt: **09720047.1**

(22) Date de dépôt: **04.03.2009**

(51) Int Cl.:
***H04N 5/33*** *(2006.01)*     ***G02B 13/14*** *(2006.01)*

(86) Numéro de dépôt international:
**PCT/EP2009/052525**

(87) Numéro de publication internationale:
**WO 2009/112401 (17.09.2009 Gazette 2009/38)**

(54) **DISPOSITIF OPTIQUE MIXTE D'IMAGERIE MULTI-FOCALE ET DE CALIBRATION IR**

OPTISCHE MISCHVORRICHTUNG FÜR MULTIFOKALE ABBILDUNG UND IR-KALIBRIERUNG

MIXED OPTICAL DEVICE FOR MULTIFOCAL IMAGING AND IR CALIBRATION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.03.2008 FR 0801184**

(43) Date de publication de la demande:
**10.11.2010 Bulletin 2010/45**

(73) Titulaire: **THALES**
**92400 Courbevoie (FR)**

(72) Inventeurs:
• **FORESTIER, Bertrand**
**75015 Paris (FR)**
• **PAYOT, Etienne**
**78960 Voisins-le Bretonneux (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 610 635**     **EP-A- 1 156 672**
**FR-A- 2 623 298**

• **AKRAM M N: "Design of a dual field-of-view optical system for infrared focal-plane arrays" PROCEEDINGS OF THE SPIE - THE INTERNATIONAL SOCIETY FOR OPTICAL ENGINEERING, SPIE, BELLINGHAM, VA; US, vol. 4767, 1 janvier 2002 (2002-01-01), pages 13-23, XP002446799**

**Description**

Le domaine de l'invention est celui de la calibration des dispositifs d'imagerie multifocale IR utilisant des détecteurs matriciels. On entend par calibration la correction des non-uniformités dans l'image. L'invention s'applique notamment aux caméras d'imagerie thermique destinées à la détection, la reconnaissance et l'identification d'objets lointains.

Les détecteurs matriciels qui utilisent de multiples capteurs élémentaires, délivrent un signal vidéo représentatif de la scène observée. Ce signal vidéo est formé par transfert et multiplexage de charges libérées par les capteurs en fonction de l'éclairement reçu par chaque capteur, à l'aide de dispositifs électroniques connus du type à couplage ou à transfert de charges. La quantité de charges transférées est également fonction du temps d'intégration des charges. En imagerie IR, le détecteur et le dispositif à transfert de charges sont disposés dans une enceinte cryostatique refroidie par des systèmes fonctionnant selon des techniques connues.

En règle générale une image comporte une scène (structurée) sur un fond uniforme (donc déstructuré) et le signal vidéo comporte alors une composante continue fonction de la luminance du fond et une composante variable représentant la scène. La composante continue a généralement une valeur relative importante par rapport à la composante variable représentant la scène. Par exemple dans les bandes 3 à 5 $\mu$m ou 8 à 12 $\mu$m, un écart de température entre la scène et le fond égal à un degré Celcius se traduit typiquement par une variation de quelques % du signal vidéo par rapport à la composante continue.

Les dispositifs d'imagerie utilisant des détecteurs matriciels et plus particulièrement les dispositifs d'imagerie IR sont soumis aux contraintes suivantes :

- d'une part, le contraste des objets est faible : pour un intervalle de température de 1 °C, il est comme on vient de le voir de quelques % alors que l'on s'intéresse en imagerie IR à des différences de températures de l'ordre de 1/10 °C;
- d'autre part, les différents capteurs élémentaires d'un détecteur matriciel n'ont généralement pas la même réponse, et ces réponses ne sont pas parfaitement stables dans le temps : en effet, pendant l'analyse d'un fond uniforme, les réponses dispersées des capteurs reproduisent les variations intrinseques des capteurs et constituent un signal instable dans le temps comportant un bruit superposé à une composante continue égale à la réponse moyenne ;
- enfin, le flux de structure du dispositif d'imagerie vu par chaque capteur, qu'il soit direct (par émissivité du « conduit » optique) ou qu'il soit vu par réflexion parasite sur les dioptres de la combinaison optique (effet Narcisse), varie au gré des fluctuations spatiales et temporelles de la température interne de la caméra. Ce flux parasite se superpose au flux utile, et fausse ainsi la perception de la scène.

On considère un détecteur matriciel qui comprend des capteurs (i,j) répartis selon I lignes et J colonnes, avec $1 \le i \le I$, $1 \le j \le J$. On rappelle qu'en première approximation, la sortie Yij de chaque capteur (i,j) du détecteur matriciel IR est linéaire en fonction du flux F reçu (somme du flux de scène et du flux de structure): Yij = Oij + Gij x F. Le terme Oij, communément appelé « offset », représente le courant d'obscurité du capteur élémentaire et Gij représente le gain du capteur.

Généralement, on effectue une pré-calibration en usine, en plaçant l'équipement face à un corps noir uniforme et en faisant varier la température de celui-ci; ceci permet de calculer pour chaque capteur élémentaire les corrections de gain et « d'offset » qui permettent de reconstituer une image parfaitement uniforme. Ces tables de correction prennent en compte les défauts propres du détecteur et les non-uniformités du flux de structure dans les conditions de calibration, et ne sont plus pertinentes dès que les conditions de température dans l'équipement s'écartent trop des conditions de calibration. On comprend qu'en fin de compte, il soit nécessaire d'apporter régulièrement des corrections aux « offsets » des capteurs élémentaires pendant l'utilisation opérationnelle de l'équipement.

Un principe efficace de correction consiste à substituer périodiquement au flux issu de la scène -par essence structurée- un flux de référence spatialement déstructuré (idéalement uniforme) et représentatif du niveau moyen dans la scène ; dans ces conditions, il est possible de mesurer les variations parasites du signal dues au détecteur et au flux de structure, et donc de restituer après soustraction une image fidèle de la scène.

Une technique classique de calibration consiste à présenter au détecteur le flux lumineux issu d'un corps noir dont la température est ajustée à la température moyenne de la scène observée grâce à une boucle d'asservissement ; le corps noir est placé dans le trajet optique à l'aide d'un commutateur opto-mécanique dédié, par exemple un miroir basculant. Ce système de corps noir asservi en température est compliqué, notamment quand sa température est beaucoup plus froide que celle de la caméra : cela pose de nombreux problèmes liés à la condensation sur le corps noir, à la rapidité de réponse de la boucle d'asservissement, au contrôle et à la mesure différentielle de la température, etc. D'autre part, pour garantir une calibration de qualité, il faut porter le corps noir à une température précise, et lorsque le corps noir ne peut pas être placé au voisinage immédiat d'un plan pupillaire il est nécessaire de supprimer les gradients thermiques le long de la surface émettrice dont l'émissivité doit être connue et contrôlée.

De façon similaire, l'utilisation d'un obturateur (« shutter » en anglais) obturant la voie optique permet de réaliser une fonction de calibration avec des performances moindres mais en s'affranchissant de la contrainte d'intégration d'un corps noir de référence.

Un autre dispositif est décrit dans le brevet EP 1 156 672, qui concerne les systèmes optiques d'imagerie IR multi champs : cette fois, au moyen d'un dispositif additionnel, on insère dans le trajet optique des composants optiques dédié à la calibration.

Dans tous ces cas on utilise pour calibrer une caméra IR, un mécanisme supplémentaire dédié à la fonction, ce qui augmente le coût, l'encombrement et la masse de l'équipement.

Un autre dispositif est décrit dans le brevet EP 0 610 635, qui concerne les systèmes optiques d'imagerie mono-focale (i.e mono-champ): il s'agit d'un dispositif mixte d'imagerie et de calibration permettant de conserver en mode calibration le même champ de vue qu'en mode imagerie, en plaçant simultanément la scène observée dans un plan pupillaire. Cela signifie qu'en mode calibration, on est dans la situation idéale où le flux externe est totalement défocalisé et issu des mêmes points du champ qu'en mode imagerie ; autrement dit le flux de scène en mode calibration est rigoureusement le même qu'en mode imagerie, et totalement déstructuré. D'un point de vue optique ceci est très contraignant, et la double condition « scène en pupille et champ identique » n'est envisageable que pour un système mono champ.

D'autres techniques de calibration sont proposées, mais au prix de contraintes opérationnelles très pénalisantes. Ainsi, pour passer en mode calibration, certains fabricants conseillent à l'utilisateur de viser une scène très rapprochée, comme par exemple le sol à l'aplomb du dispositif d'imagerie, la caméra étant focalisée sur l'infini; ou bien recommandent l'utilisation d'un cache opaque occultant l'optique de tête, supposée voisine de la pupille d'entrée, afin de présenter à chaque pixel un flux défocalisé mais dont la température n'est pas forcément proche de la température moyenne de scène.

Dans ces deux derniers cas, on remarque que lors de la calibration, l'utilisateur perd de fait sa ligne de visée d'imagerie, ce qui n'est pas satisfaisant d'un point de vue opérationnel.

Le but de l'invention est d'obtenir un dispositif d'imagerie IR multifocale calibré ne présentant ni surcoût ni contraintes opérationnelles pénalisantes du fait de la calibration.

Selon l'invention, la calibration aussi désignée « NUC » acronyme de l'expression anglo-saxonne « Non Uniformity Correction », est obtenue en positionnant judicieusement le long de l'axe optique les deux groupes mobiles nécessaires à la fonction imagerie multi-focale, que sont le variateur et le compensateur, de manière à fortement défocaliser la scène observée, supposée lointaine. L'image des non uniformités obtenue avec cette configuration NUC, dite image NUC, est alors soustraite aux images obtenues en configuration imagerie de manière à restituer des images corrigées.

Plus précisément, l'invention a pour objet un dispositif d'imagerie selon la revendication 1.

Dans ces conditions, en configuration NUC, tout objet lointain apparaît comme très fortement défocalisé sur le détecteur, et aucun des dioptres de la combinaison n'est conjugué avec le détecteur, ce qui a l'avantage de rendre la configuration NUC peu sensible à la présence de défauts locaux sur les dioptres.

En fin de compte, en utilisant judicieusement les deux groupes mobiles nécessaires à la fonction imagerie multi-focale, on dote la caméra d'un moyen de correction efficace des non-uniformités d'image sans surcoût car sans mécanisme spécifique, et sans perdre la ligne de visée d'imagerie.

Dans la configuration NUC proposée, la scène située à grande distance n'est pas -a priori- placée dans un plan pupillaire. Concrètement, l'image d'une source de petite dimension a la forme d'un disque de très grande dimension sur le plan focal, mais qui ne couvre pas forcément celui-ci en totalité.

Tant que la différence de température entre la source et le fond n'excède pas typiquement 50°C, alors le niveau d'éclairement du disque par rapport au fond est inférieur à la NETD de la caméra (acronyme de l'expression anglo-saxonne « Noise Equivalent Temperature Différence » qui représente la résolution thermique de mesure de la caméra), le raisonnement s'applique bien entendu à une scène plus complexe : si celle-ci ne comporte pas de sources trop chaudes, alors la modulation dans l'image de la scène en configuration NUC reste inférieure à la NETD de la caméra, et par conséquent tout se passe comme si la caméra observait un corps noir uniforme asservi sur la température du fond de scène. L'image NUC obtenue dans ces conditions n'est pas tout à fait représentative des défauts propres du détecteur que l'on souhaite corriger puisqu'elle comporte en plus de ceux-ci une composante basse fréquence spatiale apportée par le flux de structure (en particulier le flux apporté par l'effet Narcisse). Par conséquent, il est avantageux de compléter le dispositif par un traitement de l'image NUC de type passe-haut, apte à éliminer les non-uniformités basses fréquences spatiales ; les corrections « d'offsets » déduites de cette image NUC filtrée sont alors pertinentes pour l'ensemble des configurations imagerie.

Si maintenant la scène comporte des sources intenses de petites dimensions, alors l'image en configuration NUC est constituée d'un certain nombre de disques (autant que de sources intenses) dont les niveaux sont supérieurs à la NETD. Il est donc avantageux de compléter le dispositif par un traitement d'image apte à éliminer les non-uniformités spatiales dans l'image. Dans ce cas où les non-uniformités sont composées d'un ensemble de disques de niveaux élevés, un simple filtrage des basses fréquences ne suffit plus et il est nécessaire de réaliser un filtrage non linéaire qui permet de préserver les discontinuités significatives et de lisser les défauts dont l'amplitude est faible. Le résultat de ce filtrage est une estimation de la composante de scène défocalisée que l'on soustrait à l'image accumulée pour obtenir un estimé des défauts.

Selon une caractéristique de l'invention, le dispositif comprend un filtre (par exemple un filtre non linéaire) apte à filtrer l'image accumulée obtenue en positionnement calibration, des moyens de calcul d'une carte de correction, et des moyens de correction d'images obtenues en mode imagerie.

Les focales varient typiquement entre 25 et 135 mm, éventuellement de manière discrète.

Le type de filtre non linéaire évoqué précédemment peut par exemple être réalisé dans le cadre d'une modélisation par champ de Makov ou dans le cadre des techniques variationnelles qui conduisent à des schémas de résolution itératifs équivalents à des équations de diffusion anisotrope connues de l'homme de l'art.

La bande IR est par exemple comprise entre 3 et 5 $\mu$m.

D'autres caractéristiques et avantages de l'invention apparaîtront à la lecture de la description détaillée qui suit, faite à titre d'exemple non limitatif et en référence aux dessins annexés dans lesquels :

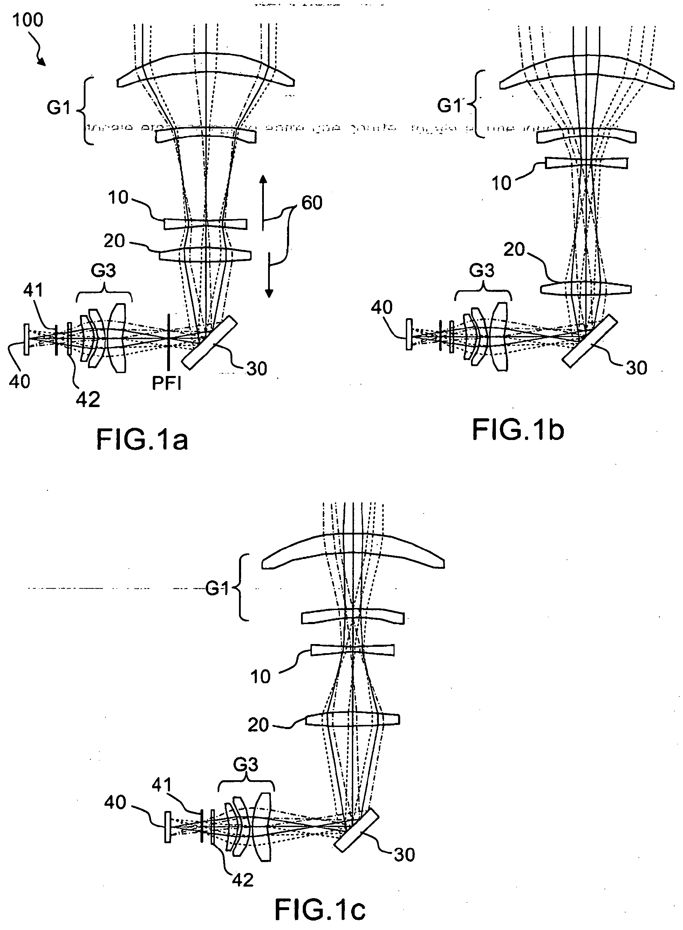

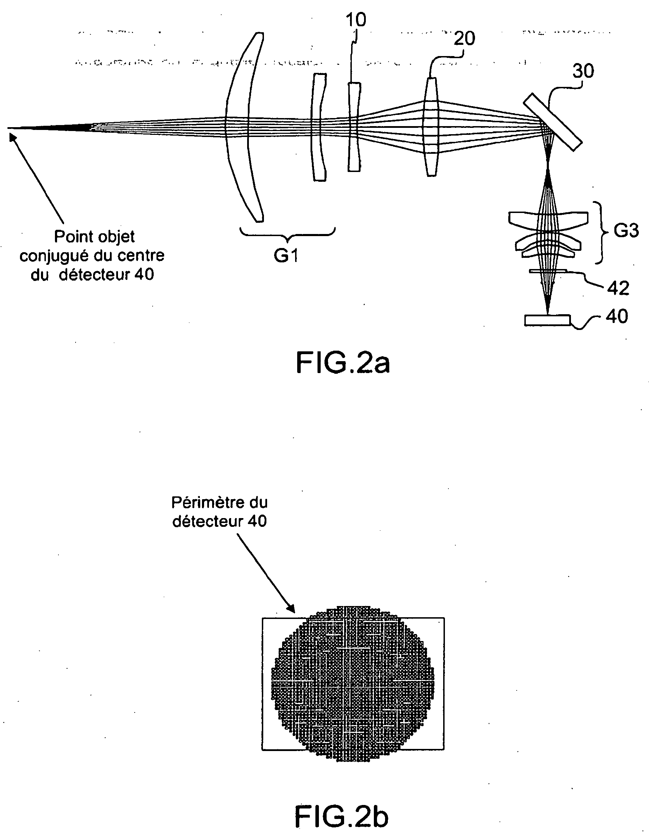

les figures 1 représentent schématiquement les principaux éléments optiques d'un dispositif d'imagerie selon l'invention en configuration imagerie longue focale (figure 1 a), imagerie courte focale (figure 1b), et NUC (figure 1c), la figure 2a montre la position du plan objet focalisé sur le détecteur lorsque le zoom est en configuration NUC, la figure 2b représente schématiquement la réponse impulsionnelle dans le plan du détecteur en configuration NUC pour un objet ponctuel lointain,

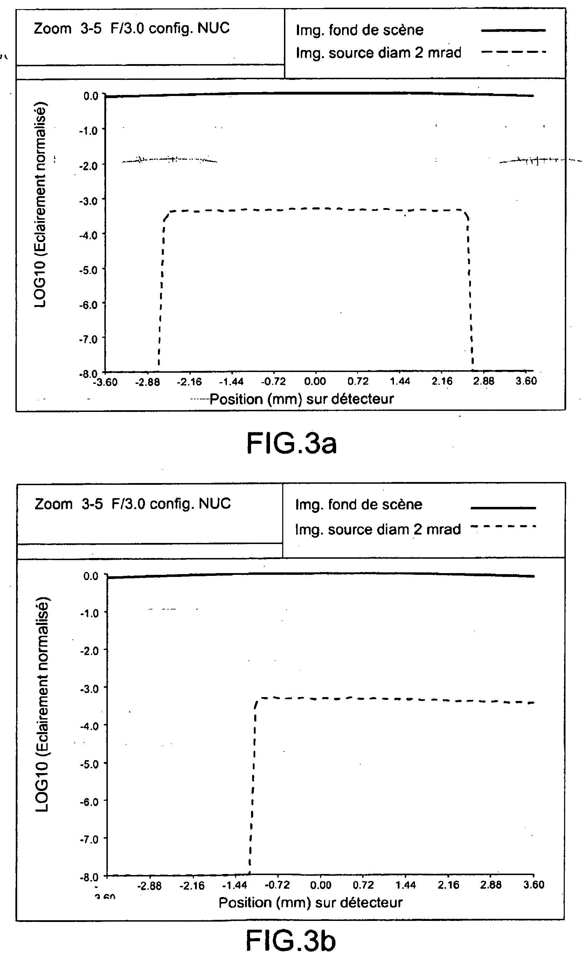

les figures 3a et 3b représentent schématiquement en configuration NUC l'éclairement du détecteur (« Focal Plane Array ») pour une scène simplifiée constituée d'un objet de petite dimension (diamètre 2 mrad) placé sur un fond uniforme. Sur ces figures, on a volontairement omis le flux de structure (en particulier le flux apporté par effet Narcisse) de façon à faire ressortir les performances propres de la défocalisation.

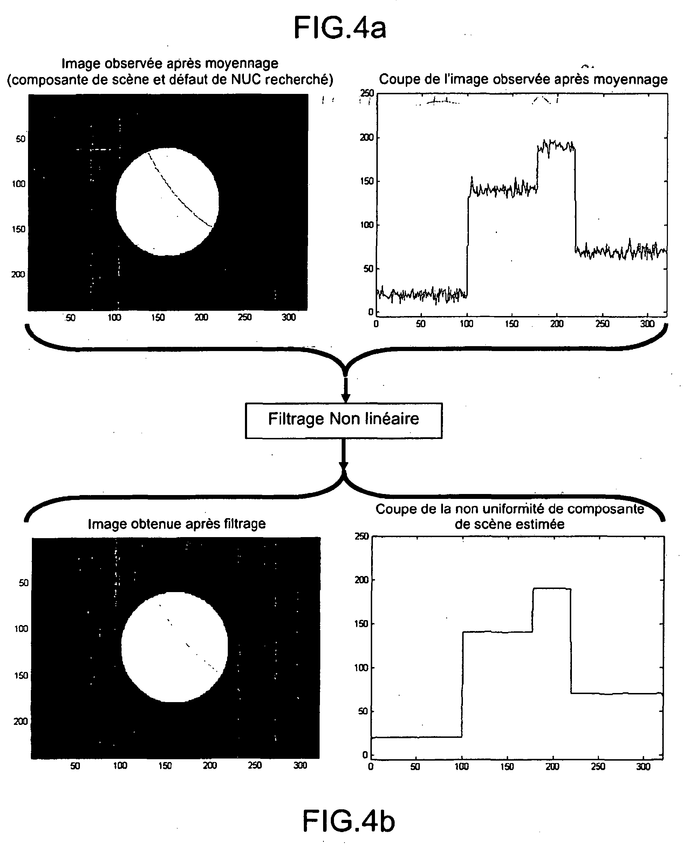

Les figures 4 représentent schématiquement un exemple d'image en configuration NUC constituée de deux disques (un petit entier et une partie d'un grand) dont le niveau est supérieur à la NETD, observée après moyennage et la coupe de cette image (figures 4a), et le résultat du filtrage sur cette image et sur la coupe de celle-ci (figures 4b). Ces figures 4b sont des estimations de la composante de scène défocalisée.

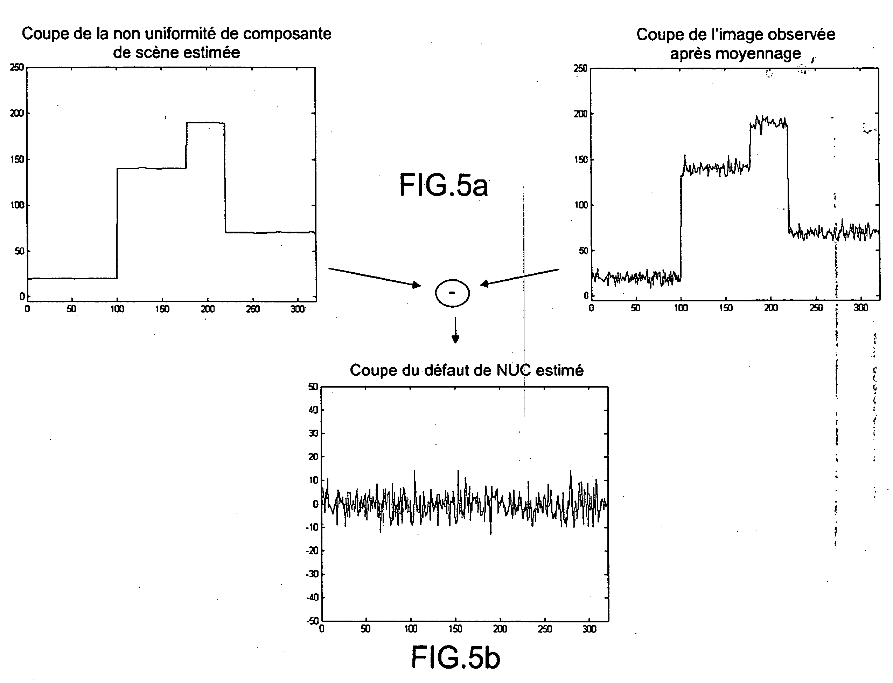

Les figures 5 représentent schématiquement une carte de correction en offset, c'est-à-dire une coupe de l'estimé des défauts (figure 5b), déterminée par soustraction de la coupe de non uniformité de scène estimée précédemment, à la coupe de l'image obtenue après moyennage (figures 5a) ; les figures 5a sont reprises des coupes des figures 4a et 4b.

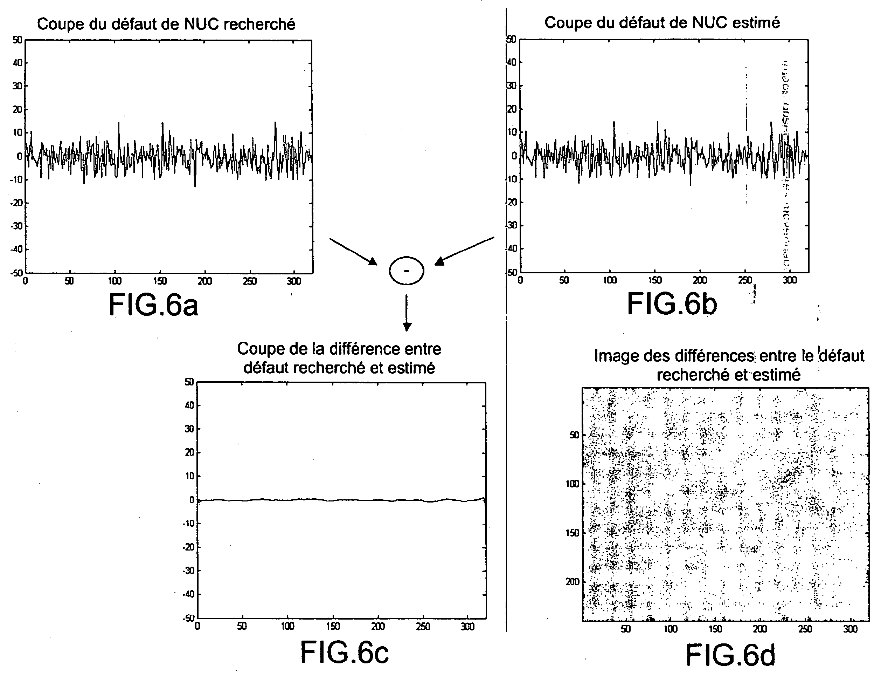

Les figures 6 représentent schématiquement le résultat de la carte de défaut réelle (fig 6a) comparée à la carte estimée (fig 6b). La différence de ces 2 cartes montre le résidu de défaut dû à l'erreur d'estimation en coupe (fig 6c) et l'image correspondante (fig 6d).

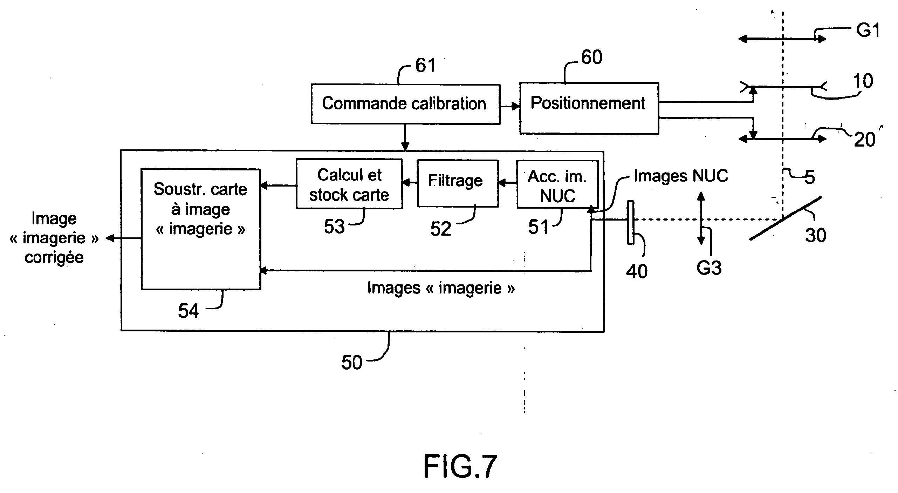

La figure 7 représente schématiquement un exemple de dispositif d'imagerie passive IR multifocale selon l'invention.

D'une figure à l'autre, les mêmes éléments sont repérés par les mêmes références.

Un exemple de dispositif 100 d'imagerie passive IR multifocale selon l'invention, décrit en relation avec les figures 1a à 1c comprend typiquement sur un même axe optique ( représenté figure 7 par la référence 5) :

- des moyens de détection comportant un détecteur matriciel IR 40 à deux dimensions placé dans une enceinte cryostatique pour être refroidi ; ce détecteur comporte par exemple 384 x 288 capteurs élémentaires au pas de 15 $\mu$m, placé dans le plan focal. Sensible par exemple dans la bande 3-5 $\mu$m il peut être composé d'un matériau de Mercure, Cadmium et Tellure (HgCdTe). D'autres matériaux peuvent être utilisés comme des matériaux multi-puits quantiques dans les composés Arséniure de Gallium/Arséniure de gallium et d'Aluminium (AsGa/AsGaAl) ; le composé Antimonure d'Indium (InSB) peut également être utilisé.

- un diaphragme d'ouverture 41 matérialisé par le diaphragme froid de l'enceinte cryostatique situé à environ 10 mm du détecteur 40, aussi désigné pupille d'imagerie, avec une ouverture caractérisée par une ouverture numérique d'environ 1/6 soit F/3, F étant la focale,

- un hublot 42 en silicium d'environ 1 mm d'épaisseur situé à environ 3,2 mm du diaphragme froid de l'enceinte cryostatique,

- un miroir de coudage 30,

- une combinaison optique comprenant les groupes dioptriques suivants :

  a. un objectif multifocale ou zoom dont les focales varient entre 27 et 132 mm ; elles varient continûment ou prennent des valeurs discrètes. Les champs correspondants varient entre 2,5° et 12° horizontalement, et donc entre 1.9° et 9° verticalement compte tenu des dimensions du détecteur ; les moyens pour faire varier la focale comprennent les lentilles respectivement désignées variateur 10 et compensateur 20 et des moyens de translation 60 de ces lentilles sur l'axe optique en une position variable selon le mode choisi. Ces moyens de translation 60 sont symbolisés sur la figure 1 a par les flèches. Un moteur pas à pas permet par exemple d'assurer cette translation. Un autre exemple de moyen de translation consiste en l'association d'un moteur à courant continu équipé d'un moto-réducteur, et d'un capteur de recopie de position de type potentiomètre résistif linéaire. Le groupe de tête convergent G1 comprend par exemple la séquence classique Si(+)/Ge(-), avec Si pour silicium, Ge pour germanium, + pour convergent, - pour divergent. Le variateur 10, divergent (par exemple en Ge), permet principalement d'obtenir une variation de la focale du système optique. Le compensateur 20, convergent (par exemple Si(+)/Ge(-)/(Si(+) en lentilles sphériques ou 1 seule lentille Si asphérique), est un élément permettant principalement de maintenir le plan de focalisation quasiment fixe. En configuration imagerie courte focale ou GC ( Grand Champ) (figure 1 b), le variateur 10 est dans sa position maximale en amont et le compensateur 20 dans sa position maximale en aval, ils permettent ainsi d'obtenir un champ horizontal de 12 °. On considère que le sens amont-aval correspond au sens de propagation de la lumière arrivant de l'extérieur pour être focalisée sur le détecteur. Pour la configuration imagerie longue focale ou PC (Petit Champ) (figure 1 a), le variateur 10 est dans sa position maximale en aval et le compensateur 20 dans sa position maximale en amont; pour passer en mode NUC, on configure le zoom de façon à conjuguer le détecteur avec un plan objet situé en amont de la lentille de tête, à quelques centimètres de celle-ci ; dans ces conditions il est évident que tout objet lointain apparaît comme fortement défocalisé ; dans cette configuration, le variateur est dans une position voisine de sa position GC et le compensateur est dans une position située légèrement en amont de sa position PC, à quelques millimètres de celle-ci. Ce positionnement est désigné positionnement de calibration. Les positions du variateur et du compensateur s'obtiennent de la façon suivante : on commence par placer le variateur en position GC et le compensateur en position PC, ce qui fournit une première configuration fortement défocalisée ; par itérations successives, on optimise les positions des 2 éléments de façon à conjuguer, avec un grandissement de calibration $g_{NUC}$ le plus grand possible, un plan objet situé typiquement à quelques centimètres en amont de G1 et le plan focal du détecteur 40 ; ceci a pour effet de maximiser la défocalisation d'un objet situé à l'infini. Cette optimisation s'accompagne d'un certain nombre de contraintes visant par exemple à ne pas trop augmenter la course des mécanismes par rapport au seul besoin d'imagerie ; en outre, il est possible de garder une certaine distance entre le plan objet et le dioptre externe du groupe G1, afin de rendre la configuration NUC peu sensible à la présence des inévitables défauts de surface sur ce dioptre. Dans l'exemple donné, les caractéristiques de la configuration NUC après optimisation sont les suivantes :

- plan objet situé à 6,8 cm en amont de G1
- variateur à 1,7 mm en aval de sa position GC
- compensateur à 7,2 mm en amont de sa position PC Ceci conduit à un grandissement $g_{NUC}$ = 0,277.

b. un groupe relais G3 imageant un plan focal intermédiaire PFI sur le plan focal du détecteur 40, comprend par exemple une des séquences sphériques Si(+)/CaF2( -)/Si(+) ou Si(+)/Ge(-)/Si(+), CaF2 désignant de la fluorine ; moyennant quelques sacrifices sur la qualité d'image, le groupe relais peut éventuellement se réduire à une seule lentille asphérique en silicium.

Le dispositif d'imagerie comprend en outre une unité de traitement d'image 50 reliée au détecteur 40, montrée figure 7. Cette unité a notamment pour fonction d'appliquer aux images obtenues en configuration imagerie, les corrections de non uniformités obtenues en configuration NUC.

On va à présent détailler les éléments du dispositif de calibration permettant de réaliser cette configuration NUC.

La figure 2b montre qu'en configuration NUC, la réponse du zoom à un objet ponctuel infiniment éloigné couvre pratiquement la totalité du détecteur 40, dont le périmètre est indiqué.

Les figures 3a et 3b détaillent les composantes de l'éclairement du plan focal lorsque le zoom configuré en NUC observe un objet de diamètre angulaire 2 mrad placé sur un fond uniforme. On donne la composante de fond de scène et la composante apportée par l'image fortement défocalisée de la source pour 2 positions de celle-ci dans le champ : sur la figure 3a la source est localisée au centre du champ alors que sur la figure 3b, elle est placée hors d'axe. Les éclairements sont normalisés, c'est-à-dire qu'ils sont donnés pour une luminance de fond (respectivement de source) unité et l'éclairement de fond de scène au centre du détecteur est supposé égal à 1. Les abscisses indiquées sont celles comprises entre les bords diagonaux du détecteur situé dans le plan focal.

En configuration NUC comme en configuration imagerie, le fond de scène produit le même éclairement qui s'écrit :

$$I_{fond} = \text{Transm} \times PSA_{utile} \times L(T_{fond}).$$

Transm est la transmission de l'optique,

PSA$_{utile}$ ( « Projected Solid Angle ») est l'angle solide projeté utile, qui vaut dans notre exemple environ 87 millistéradians (système ouvert à F/3.0) ; en toute rigueur PSA$_{utile}$ peut varier légèrement d'un point à l'autre de la matrice (effet « cos$^4\theta$ »), L(T$_{fond}$) est la luminance du fond de scène intégrée dans la bande spectrale utile (par exemple 3.4-4.8 μm).

En configuration NUC, l'image de l'objet ne produit pas un éclairement uniforme dans le plan (x,y) du détecteur. Celui-ci s'écrit :

$$I_{NUC}(x,y) = \text{Transm} \times PSA_{NUC}(x,y) \times L(T).$$

PSA$_{NUC}$(x,y) est l'angle solide projeté au point (x,y), délimite par le diaphragme d'ouverture et l'objet : en effet lorsque la défocalisation est très importante, la source n'est pas nécessairemet résolue par le détecteur. L(T) est la luminance de l'objet à température T, intégrée dans la bande spectrale utile.

Sont représentées figures 3a et 3b, en fonction de la position (x,y) par rapport au centre (0,0) du détecteur :

- l'image du fond de scène soit

$$\text{Log10 } [PSA_{utile}(x,y) / PSA_{utile}(0,0)],$$

- l'image de la source soit

$$\text{Log10 } [PSA_{NUC}(x,y) / PSA_{utile}(0,0)].$$

Les variations spatiales de PSA$_{NUC}$ produisent ainsi une différence de température apparente par rapport au fond qui s'écrit :

$$\Delta T = L(T) \times [PSA_{NUCmax}/PSA_{utile}] \times [1 - PSA_{NUCmin}/PSA_{NUCmax}] / [dL/dT](T_{fond}).$$

Dans notre exemple PSA$_{NUCmin}$ = 0, et en première approximation on peut montrer que PSA$_{NUXmax}$ = $\pi (\delta\theta)^2$ / g$_{NUC}^2$, où $\delta\theta$ représente le demi-diamètre angulaire de l'objet (ici 1 mrad) ; on comprend ainsi qu'il faille maximiser g$_{NUC}$ pour diminuer PSA$_{NUCmax}$, et par conséquent $\Delta T$.

Pour fixer les idées, sur les figures 3a et 3b, on relève que :

$$[PSA_{NUCmax}/PSA_{utile}] \times [1 - PSA_{NUCmin}/PSA_{NUCmax}] = 0.0005$$

Pour un objet à 50 °C sur un fond à 20°C, on a :

$$L(T)/ [dL/dT](T_{fond}) = 73 \text{ °K, et par conséquent } \Delta T = 37 \text{ m°K.}$$

Pour un objet à 100°C sur un fond à 20°C, on a :

$$L(T)/ [dL/dT](T_{fond}) = 298 \text{ °K, et par conséquent } \Delta T = 149 \text{ m°K}$$

En admettant que la NETD est de l'ordre de 100 m °K, si la scène ne comporte que des objets dont le contraste thermique par rapport au fond n'excède pas environ 50°C, alors celle-ci apparaît en configuration NUC comme uniforme.

Dans la configuration NUC proposée, la scène située à grande distance n'est pas -a priori- placée dans un plan pupillaire. Concrètement, l'image d'une source de petite dimension a la forme d'un disque de très grande dimension sur le plan focal, mais qui ne couvre pas forcément celui-ci en totalité ; le niveau d'éclairement du disque par rapport au fond est inférieur à la NETD de la caméra (acronyme de l'expression anglo-saxonne « Noise Equivalent Température Difference » qui représente la résolution thermique de mesure de la caméra) tant que la différence de température entre la source et le fond n'excède pas typiquement 50°C. Le raisonnement s'applique bien entendu à une scène plus complexe. : si celle-ci ne comporte pas de sources très chaudes, alors la modulation dans l'image de la scène en configuration NUC reste inférieure à la NETD de la caméra, et par conséquent tout se passe comme si la caméra observait un corps noir uniforme asservi sur la température du fond de scène. En mode imagerie, l'image corrigée est alors obtenue par soustraction de l'image NUC (défocalisée) ; ceci est réalisé par l'unité 50 de traitement d'images dont le fonctionnement sera détaillé plus loin.

De préférence un filtrage est appliqué à l'image NUC afin d'extraire la composante de bruit spatial lié au détecteur.

En effet l'image NUC comporte - en plus des défauts propres du détecteur - une composante basse fréquence spatiale apportée par le flux de structure (en particulier le flux apporté par l'effet Narcisse). Il est par conséquent avantageux de compléter le dispositif par un traitement de l'image NUC de type passe-haut, apte à éliminer les non-uniformités de basses fréquences spatiales ; les corrections « d'offsets » déduites de cette image NUC filtrée sont alors pertinentes pour l'ensemble des configurations imagerie. On rappelle que généralement, l'effet Narcisse est faible dans les configurations PC, et qu'en outre l'homme de l'art limite autant que possible le différentiel de Narcisse entre les différentes configurations du zoom.

Si maintenant la scène comporte des sources intenses de petites dimensions, alors l'image en configuration NUC est constituée d'un certain nombre de disques (autant que de sources intenses) dont les niveaux sont supérieurs à la NETD ; un exemple d'une telle image observée après moyennage et la coupe de cette image sont montrées figure 4a. Il est donc avantageux de compléter le dispositif par un traitement d'image apte à éliminer les non-uniformités spatiales dans l'image.

L'abscisse du repère associé aux images est la même que celle du repère associé aux coupes. La coupe représente en ordonnée les éclairements de chacun des pixels situés sur la ligne centrale de l'image.

Dans le cas explicité ci-dessus où les non uniformités sont composées d'un ensemble de disques de niveaux élevés, un simple filtrage des basses fréquences ne suffit plus et il est nécessaire de réaliser un filtrage non linéaire qui permet de préserver les discontinuités significatives et de lisser les défauts dont l'amplitude est faible. Dans le cas présent, les fortes discontinuités quel'on souhaite préserver lors du filtrage sont liées à la présence d'objets fortement contrastés ( typiquement tels que $\Delta T> 50°c$) dans la scène. Le résultat de ce filtrage est une estimation de la composante de scène défocalisée que l'on soustrait à l'image accumulée pour obtenir un estimé des défauts.

Le type de filtre non linéaire évoqué précédemment peut par exemple être réalisé dans le cadre d'une modélisation par champ de Makov ou par des techniques variationnelles qui conduisent à des schémas de résolution itératifs équivalents à des équations de diffusion anisotrope connues de l'homme de l'art. Le résultat obtenu par ce type de filtrage non linéaire est illustré sur les figures 4b.

Ce filtrage comprend par exemple les étapes suivantes :

- Accumulation/Moyennage numérique d'images défocalisées : cette opération a pour but de réduire voire de supprimer l'influence du bruit temporel. Cette opération peut être réalisée :

  ○ soit directement selon l'algorithme suivant :

    - I accum = 0
    - Pour I allant de 1 à N

      • I accum = I accum + I current(I)

    - Fin pour
    - Imoyenne = Iaccum / N

  ○ Soit récursivement selon l'algorithme suivant ($\alpha<1$):

    - I accu m = I current(I)
    - Tant que le moyennage est actif

      • Imoyenne = $\alpha$*Imoyenne + $(1-\alpha)$*Icurrent (I)

    - Fin tant que

    Cette opération est généralement réalisée à l'aide d'un réseau logique programmable de type FPGA acronyme de l'expression anglo-saxonne « field-programmable gate array », afin de réduire le temps de latence mais elle peut aussi être réalisée par l'intermédiaire d'un microprocesseur. Une attention particulière doit être portée à la dynamique de codage des images Imoyenne et Iaccum de façon à ne pas perdre l'amélioration de dynamique obtenue (ex : codage sur 6 bits de plus que l'image courante pour une accumulation de 64 =$2^6$ images). Une accumulation d'une dizaine à une centaine d'images est possible selon le délai accordé à la calibration et par exemple pour une accumulation de 64 images avec une acquisition à 100 Hz un délai de 640 ms est nécessaire pour le calcul de lmoyenne.

- Détermination sur l'image accumulée de la composante due à la scène défocalisée ; cette composante est formée d'un ensemble de disques de rayons variables : cette opération a pour but de déterminer les non uniformités sur l'image accumulée provenant des éventuels objets chauds ayant pu se trouver dans le champ lors de l'acquisition des images de calibration. L'estimation de ces non uniformités nécessite un filtrage non linéaire permettant de préserver les discontinuités à l'aide d'une modélisation par champ de Makov ou par des techniques variationnelles. On utilise alors de préférence un filtre itératif modélisant une équation de diffusion non linéaire dite « diffusion de Malik et Perona » permettant de préserver les discontinuités. Un tel exemple de filtrage est illustré sur les figures 4. Les figures 4a représentent schématiquement une image observée après moyennage et la coupe de cette image ; les résultats du filtrage sur cette image et sur la coupe de celle-ci sont représentés figures 4b. On obtient un estimé des défauts en soustrayant une estimation de la composante de scène défocalisée, à l'image accumulée.
- Détermination de la carte de correction en «offset» du détecteur : cette carte de correction en offset (fig 5b) est déterminée par soustraction de la composante de scène estimée précédemment (fig 4b) à l'image accumulée (fig 4a).

Les figures 6 illustrent la comparaison entre la carte de défaut réelle (fig 6a) et la carte estimée (fig 6b). La différence de ces 2 cartes (fig 6c, 6d) montre le résidu de défaut dû à l'erreur d'estimation en coupe figure 6c et en image figure 6d : il est quasiment nul.

On a représenté figure 7 un exemple de dispositif d'imagerie selon l'invention. Il comprend les éléments décrits en relation avec les figures 1, ainsi que le dispositif de calibration 61 relié aux moyens de positionnement (en l'occurrence de translation) 60, et à l'unité de traitement 50.

Cette unité de traitement 50 comprend :

- des moyens 51 d'accumulation d'images obtenues en configuration NUC, tels que par exemple un FPGA comme indiqué précédemment,
- un filtre 52 apte à appliquer un filtrage non linéaire à ces images NUC, tel que décrit précédemment,
- des moyens 53 de calcul de la carte de correction en « offset » du détecteur, tels que décrits précédemment et de stockage de cette carte de correction,
- et des moyens 54 de soustraction de cette carte de correction mémorisée, aux images obtenues en configuration imagerie, de manière à obtenir des images corrigées.

Lorsque l'utilisateur souhaite activer le mode calibration, il actionne le mécanisme de calibration 61, qui d'une part commande les moyens de positionnement 60 du variateur 10 et du compensateur 20 en positionnement calibration (ou NUC) et d'autre part commande l'unité de traitement 50 afin que les images NUC issues du détecteur 40 soient soumises au traitement permettant d'obtenir la carte de correction.

Lorsque l'utilisateur souhaite activer le mode imagerie, il actionne le mécanisme de calibration 61, qui d'une part commande les moyens de positionnement 60 du variateur 10 et du compensateur 20 en fonction de la focale souhaitée, et d'autre part commande l'unité de traitement 50 afin que les images issues du détecteur 40 et obtenues en mode « imagerie » soient corrigées par les moyens 54.

**Revendications**

1.  Dispositif d'imagerie (100) qui présente un axe optique (5) et qui comprend un détecteur IR matriciel (40), un objectif multifocale, la focale étant comprise entre une courte focale et une longue focale, comportant un groupe de lentilles frontal (G1), un variateur (10), un compensateur (20) et des moyens de positionnement (60) du variateur et du compensateur, les positions du variateur et du compensateur étant respectivement adaptées à la focale, les moyens de positionnement (60) comprenant des moyens de translation du variateur et du compensateur sur l'axe optique (5) et le dispositif comportant un mécanisme (61) de calibration qui comprend une commande des moyens de positionnement (60) du variateur (10) au voisinage de sa position courte focale et du compensateur (20) en amont de sa position longue focale de façon à conjuguer le plan du détecteur (40) avec un plan objet réel situé en amont de la lentille de tête du groupe de lentilles frontal (G1) à quelques centimétres de celle ci, afin de maximiser la défocalisation d'un objet situé à l'infini , ce positionnement étant désigné positionnement de calibration, et le dispositif comprenant reliée au détecteur matriciel (40), une unité de traitement (50) qui comporte des moyens d'accumulation (51) d'images obtenues en positionnement calibration.

2. Dispositif d'imagerie selon la revendication précédente, **caractérisé en ce que** l'unité de traitement (50) comporte relié aux moyens d'accumulation, un filtre (52) apte à filtrer l'image accumulée obtenue en positionnement calibration.

3. Dispositif d'imagerie selon la revendication précédente, **caractérisé en ce que** le filtre (52) est un filtre non linéaire.

4. Dispositif d'imagerie selon l'une des revendications précédentes, **caractérisé en ce que** l'unité de traitement (50) comprend des moyens de calcul (53) d'une carte de correction.

5. Dispositif d'imagerie selon l'une des revendications précédentes, **caractérisé en ce que** l'unité de traitement (50) comporte des moyens de correction (54) d'images obtenues en mode imagerie.

6. Dispositif d'imagerie selon l'une des revendications précédentes, **caractérisé en ce que** les focales varient entre 25 et 135 mm.

7. Dispositif d'imagerie selon l'une des revendications précédentes, **caractérisé en ce qu'**il comprend au moins 1 focale en plus des courte et longue focales et **en ce que** ces focales sont discrètes.

8. Dispositif d'imagerie selon l'une des revendications précédentes, **caractérisé en ce que** la bande IR est comprise entre 3 et 5 $\mu$m.


**Patentansprüche**

1. Abbildungsvorrichtung (100) mit einer optischen Achse (5), die Folgendes umfasst: einen Matrix-IR-Detektor (40), eine multifokale Linse, deren Brennweite im Bereich zwischen einer kurzen Brennweite und einer langen Brennweite liegt, umfassend eine Gruppe von Frontlinsen (G1), einen Variator (10), einen Kompensator (20) und Mittel (60) zum Positionieren des Variators und des Kompensators, wobei die Positionen des Variators und des Kompensators jeweils an die Brennweite angepasst sind, wobei die Positionierungsmittel (60) Mittel zum Verschieben des Variators und des Kompensators auf der optischen Achse (5) umfassen, wobei die Vorrichtung einen Kalibrationsmechanismus (61) umfasst, der eine Steuerung für die Mittel (60) zum Positionieren des Variators (10) in der Nähe seiner kurzen Brennweitenposition und des Kompensators (20) stromaufwärts von seiner langen Brennweitenposition auf eine solche Weise umfasst, dass die Ebene des Detektors (40) mit einer Ebene eines realen Objekts konjugiert wird, das sich stromaufwärts von der Kopflinse der Gruppe von Frontlinsen (G1) in einem Abstand von mehreren Zentimetern davon befindet, um die Defokussierung eines sich im Unendlichen befindlichen Objekts zu maximieren, wobei diese Positionierung als Kalibrationspositionierung bezeichnet wird, wobei die Vorrichtung, mit dem Matrixdetektor (40) verbunden, eine Verarbeitungseinheit (50) umfasst, die Mittel (51) zum Akkumulieren von bei der Kalibrationspositionierung gewonnenen Bildern umfasst.

2. Abbildungsvorrichtung nach dem vorherigen Anspruch, **dadurch gekennzeichnet, dass** die Verarbeitungseinheit (50), mit den Akkumulationsmitteln verbunden, ein Filter (52) umfasst, das das bei der Kalibrationspositionierung gewonnene akkumulierte Bild filtern kann.

3. Abbildungsvorrichtung nach dem vorherigen Anspruch, **dadurch gekennzeichnet, dass** das Filter (52) ein nichtlineares Filter ist.

4. Abbildungsvorrichtung nach einem der vorherigen Ansprüche, **dadurch gekennzeichnet, dass** die Verarbeitungseinheit (50) Mittel (53) zum Berechnen einer Korrekturtabelle umfasst.

5. Abbildungsvorrichtung nach einem der vorherigen Ansprüche, **dadurch gekennzeichnet, dass** die Verarbeitungseinheit (50) Mittel (54) zum Korrigieren von im Abbildungsmodus erhaltenen Bildern umfasst.

6. Abbildungsvorrichtung nach einem der vorherigen Ansprüche, **dadurch gekennzeichnet, dass** die Brennweiten zwischen 25 und 135 mm variieren.

7. Abbildungsvorrichtung nach einem der vorherigen Ansprüche, **dadurch gekennzeichnet, dass** sie wenigstens eine Brennweite zusätzlich zu der kurzen und der langen Brennweite umfasst, und dadurch, dass die Brennweiten diskret sind.

8. Abbildungsvorrichtung nach einem der vorherigen Ansprüche, **dadurch gekennzeichnet, dass** das IR-Band im Bereich zwischen 3 und 5 μm liegt.

**Claims**

1. An imaging device (100) having an optical axis (5) and comprising a matrix IR detector (40), a multifocal lens, the focal length of which ranges between a short focal length and a long focal length, comprising a group of frontal lenses (G1), a variator (10), a compensator (20) and means (60) for positioning said variator and said compensator, with the positions of said variator and of said compensator being respectively adapted to the focal length, said positioning means (60) comprising means for translationally moving said variator and said compensator on said optical axis (5), said device further comprising a calibration mechanism (61) comprising a control for said means (60) for positioning said variator (10) in the vicinity of its short focal length and said compensator (20) upstream of its long focal length position so as to conjugate the plane of said detector (40) with a plane of a real object located upstream of the head lens of said group of frontal lenses (G1) several centimetres therefrom, so as to maximise the defocussing of an object located at infinity, this positioning being called calibration positioning, said device comprising, connected to said matrix detector (40), a processing unit (50) comprising means (51) for gathering images obtained during calibration positioning.

2. The imaging device according to the preceding claim, **characterised in that** said processing unit (50) comprises, connected to said gathering means, a filter (52) able to filter the gathered image obtained during calibration positioning.

3. The imaging device according to the preceding claim, **characterised in that** said filter (52) is a non-linear filter.

4. The imaging device according to any one of the preceding claims, **characterised in that** said processing unit (50) comprises means (53) for computing a correction chart.

5. The imaging device according to any one of the preceding claims, **characterised in that** said processing unit (50) comprises means (54) for correcting images obtained in imaging mode.

6. The imaging device according to any one of the preceding claims, **characterised in that** said focal lengths vary between 25 and 135 mm.

7. The imaging device according to any one of the preceding claims, **characterised in that** it comprises at least one focal length in addition to the short and long focal lengths and **in that** said focal lengths are discrete.

8. The imaging device according to any one of the preceding claims, **characterised in that** the IR band ranges between 3 and 5 μm.

**FIG.1a**

**FIG.1b**

**FIG.1c**

Point objet
conjugué du centre
du détecteur 40

FIG.2a

Périmètre du
détecteur 40

FIG.2b

| Zoom 3-5 F/3.0 config. NUC | Img. fond de scène ———————— |
| | Img. source diam 2 mrad — — — — |

LOG10 (Eclairement normalisé)

0.0
-1.0
-2.0
-3.0
-4.0
-5.0
-6.0
-7.0
-8.0

-3.60  -2.88  -2.16  -1.44  -0.72  0.00  0.72  1.44  2.16  2.88  3.60

————Position (mm) sur détecteur

## FIG.3a

| Zoom 3-5 F/3.0 config. NUC | Img. fond de scène ———————— |
| | Img. source diam 2 mrad — — — — — |

LOG10 (Eclairement normalisé)

0.0
-1.0
-2.0
-3.0
-4.0
-5.0
-6.0
-7.0
-8.0

-2.88  -2.16  -1.44  -0.72  0.00  0.72  1.44  2.16  2.88  3.60
3.60

Position (mm) sur détecteur

## FIG.3b

13

# FIG.4a

Image observée après moyennage
(composante de scène et défaut de NUC recherché)

Coupe de l'image observée après moyennage

Filtrage Non linéaire

Image obtenue après filtrage

Coupe de la non uniformité de composante
de scène estimée

# FIG.4b

Coupe de la non uniformité de composante
de scène estimée

Coupe de l'image observée
après moyennage

## FIG.5a

Coupe du défaut de NUC estimé

## FIG.5b

EP 2 248 338 B1

Coupe du défaut de NUC recherché

FIG.6a

Coupe du défaut de NUC estimé

FIG.6b

Coupe de la différence entre défaut recherché et estimé

FIG.6c

Image des différences entre le défaut recherché et estimé

FIG.6d

FIG.7

**EP 2 248 338 B1**

## RÉFÉRENCES CITÉES DANS LA DESCRIPTION

### Documents brevets cités dans la description

- EP 1156672 A

- EP 0610635 A